# EUROPÄISCHE PATENTSCHRIFT

(11) **EP 3 592 993 B1**
(45) Veröffentlichungstag und Bekanntmachung des Hinweises auf die Patenterteilung: **07.04.2021**
(21) Anmeldenummer: 17734051.0
(22) Anmeldetag: 28.06.2017
(51) Int. Cl.: F16B 12/20

(54) **SPANNVERBINDER UND BEFESTIGUNGSANORDNUNG MIT EINEM SOLCHEN**
TENSION CONNECTOR AND FIXING ARRANGEMENT HAVING SUCH A TENSION CONNECTOR
RACCORD DE SERRAGE ET ENSEMBLE DE FIXATION COMPRENANT LEDIT RACCORD

(30) Priorität: 06.03.2017 DE 202017101263 U
(43) Veröffentlichungstag der Anmeldung: 15.01.2020
(73) Patentinhaber: Häfele Berlin GmbH & Co KG, 12307 Berlin (DE)
(72) Erfinder: NITSCHMANN, Gunter, 72285 Pfalzgrafenweiler (DE); SAWATZKI, Gerd, 15518 Rauen (DE)
(74) Vertreter: Kohler Schmid Möbus Patentanwälte
(86) Internationale Anmeldenummer: PCT/EP2017/065949
(87) Internationale Veröffentlichungsnummer: WO 2018/162090

(56) Entgegenhaltungen:
- EP-A1- 0 698 357
- EP-A2- 0 878 630
- DE-A1-102007 039 595

## Beschreibung

Die Erfindung betrifft einen Spannverbinder zum Verbinden zweier Bauteile mit einem Bolzen, der einen Bolzenschaft und einen Bolzenkopf aufweist, und mit einem Exzenterhebel, der auf dem Bolzenkopf schwenkbar gelagert ist und in seiner Spannstellung die beiden Bauteile aneinander festklemmt, sowie eine Befestigungsanordnung mit einem solchen Spannverbinder.

Aus der EP 0 878 630 A2 ist ein Spannverbinder mit einem Exzenterhebel bekannt, der fest an einem Spreizteil um einen Stift schwenkbar zwischen einer Ausgangsstellung und einer Spannstellung gelagert ist. Der Stift definiert die Schwenkachse und ist in den Exzenterhebel eingepresst. Der Spannverbinder besteht somit aus drei Teilen: Exzenterhebel, Spreizteil und Stift. Auf dem Spreizteil ist wiederum ein Dübel angeordnet, mit dem der Spannverbinder in eine Bohrung eines ersten Bauteils eingesetzt wird. Durch Verschwenken des Exzenterhebels in seine Spannstellung wird das Spreizteil relativ zum Dübel angezogen, der dadurch aufgespreizt und in der Bohrung verankert wird.

Weitere gattungsgemäße Spannverbinder sind bspw. aus der DE 10 2007 039 595 A1 und der EP 0 698 357 bekannt.

Demgegenüber ist es die Aufgabe der Erfindung, einen einfachen universalen Spannverbinder sowie eine Befestigungsanordnung mit einem solchen Spannverbinder anzugeben.

Diese Aufgabe wird erfindungsgemäß gelöst durch einen Spannverbinder gemäß Anspruch 1.

Erfindungsgemäß erfolgt das Festspannen werkzeuglos mit einem separaten Exzenterhebel, der zugleich das Klemm- bzw. Haltemittel für ein zu befestigendes Bauteil bildet, so dass kein zusätzliches Werkzeug zum Herbeiführen oder Lösen der Verbindung sowie kein am zu verbindenden Teil dauerhaft anzubringender Hilfsbeschlag erforderlich ist. Der erfindungsgemäße Spannverbinder besteht somit nur aus zwei Teilen: Bolzen und Exzenterhebel.

Da die Schwenkachse des Exzenterhebels bereits durch den vom Bolzenschaft durchgriffenen Schlitz festgelegt ist, ist der Bolzenkopf auf seiner dem Bolzenschaft zugewandten Bolzenseite und der Topfinnenraum jeweils teilkugel- oder teilzylinderförmig ausgebildet sein.

den Bolzen und den Exzenterhebel unverlierbar miteinander zu verbinden, weist der Schlitz zwischen der Topföffnung und der Ausgangsstellung des Bolzens eine elastisch aufweitbare Engstelle auf, deren Schlitzbreite geringfügig kleiner als der Durchmesser des Bolzenschafts ist. Der Bolzen wird unter Aufweitung der Engstelle in den Exzenterhebel eingeklickt bzw. eingerastet.

Erfindungsgemäß nimmt der Abstand der exzentrischen zum Topfinnenraum in Spannrichtung ausgehend von der ebenen Anlagefläche kontinuierlich bis zum Topfboden zu und geht über eine Kante in den Topfboden über, um den Exzenterhebel in der Spannstellung zu sichern. Zusätzlich kann eine Selbstsicherung des Exzenterhebels auch durch ein Überspannen kurz vor der Spannstellung erfolgen. Der Spannweg steigt wegen des Überspannens nur bis kurz vor den Topfboden an, dann erfolgt die Selbstsicherung durch Nachlassen der Spannung. Am Lagertopf des Exzenterhebels kann ein weiteres Bauteil befestigt und dabei durch einen erfindungsgemäß die Topföffnung umgebenden Kragen am Exzenterhebel gesichert sein.

Das dem Bolzenkopf abgewandte Ende des Bolzens weist erfindungsgemäß mindestens einen Spreizkonus auf, welcher mit einer z.B. aufgeclipsten Spreizmuffe zusammenwirkt.

Der Exzenterhebel kann vorteilhaft als ein Trägerteil, insbesondere zum Aufstecken eines weiteren Bauteils, ausgebildet sein oder eine Aufnahme aufweisen, die in der Spannstellung des Spannverbinders in Richtung quer zur Bolzenachse des Bolzens offen ist, um darin ein weiteres Bauteil einzuhängen.

Bevorzugt weist der Exzenterhebel an seiner in Spannrichtung weisenden Rückseite einen vorstehenden Zapfen auf, um den Exzenterhebel zusätzlich am Bauteil abzustützen.

Vorzugsweise ist der Exzenterhebel ein einstückiges Teil, und der Bolzen ein Stahlteil, insbesondere ein Stahl-Fließpressteil.

Die Erfindung betrifft auch eine Befestigungsanordnung zum Befestigen von Bauteilen mit mindestens einem wie oben ausgebildeten Spannverbinder.

Eine bevorzugte Weiterbildung der Befestigungsanordnung weist zwei aneinander anliegende Bauteile auf, wobei der Bolzen des Spannverbinders an dem einen Bauteil befestigt ist und mit seinem Bolzenkopf aus dem anderen Bauteil vorsteht und wobei der in Spannstellung befindliche Exzenterhebel des Spannverbinders die beiden Bauteile aneinander festklemmt. Vorzugsweise liegt in der Spannstellung der Exzenterhebel mit seinem Hebelarm am zweiten Bauteil an und ist dabei am zweiten Bauteil verrastet. Vorteilhaft kann ein weiteres Bauteil, besondere mittels eines Schlüssellochs, an dem Exzenterhebel befestigt sein.

Eine andere bevorzugte Weiterbildung der Befestigungsanordnung weist zwei Seitenwände auf, zwischen denen ein weiteres Bauteil, z.B. ein Tablar oder eine Kleiderstange, mittels Spannverbindern befestigt ist, deren Spannbolzen in den beiden Seitenwänden verankert und deren auf den Bolzenköpfen montierten Exzenterhebel an der Seitenwand festgespannt sind, wobei dass das weitere Bauteil an den Exzenterhebeln hängend gehalten ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen erfindungsgemäßen Spannverbinder mit einem Bolzen und einem Exzenterhebel im noch nicht montierten Zustand;
- Fign. 2a-2d: die einzelnen Montageschritte zum Montieren (Fign. 2a, 2b) des Spannverbinders von Fig. 1, sowie den montierten Spannverbinder in seiner Ausgangsstellung (Fig. 2c) und in seiner Spannstellung (Fig. 2d);
- Fign. 3a, 3b: einen Griff aus Kunststoff mit zwei erfindungsgemäßen Spannverbindern (Fig. 3a), deren Bolzen als Einlegeteile im Griff verankert sind, sowie den an einer Möbelwand montierten Griff (Fig. 3b);
- Fig. 4: einen modifizierten Griff mit zwei erfindungsgemäßen Spannverbindern, deren Bolzen in den Griff eingeschraubt sind;
- Fign. 5a, 5b: einen erfindungsgemäßen Spannverbinder mit einem Spreizbolzen und einer aufgeclipsten Spreizmuffe (Fig. 5a) und beim Verspannen von zwei Bauteilen (Fig. 5b);
- Fig. 6: ein weiteres Bauteil, das an dem Spannverbinder der Fig. 5 eingehängt ist;
- Fign. 7, 8: jeweils zwei Bauteile, die mithilfe zweier Spannverbinder miteinander verspannt sind;
- Fign. 9a-9e: die einzelnen Montageschritte zum Befestigen eines Tablars an zwei Seitenwänden mittels zweier Spannverbinder;
- Fign. 10a-10d: die einzelnen Montageschritte zum Befestigen einer Kleiderstange an zwei Seitenwänden mittels zweier Spannverbinder; und
- Fig. 11: eine Adapterplatte zur Befestigung einer Schubladenführung an einem Möbelkorpus mittels eines Spannverbinders.

In der folgenden Figurenbeschreibung werden für gleiche bzw. funktionsgleiche Bauteile identische Bezugszeichen verwendet.

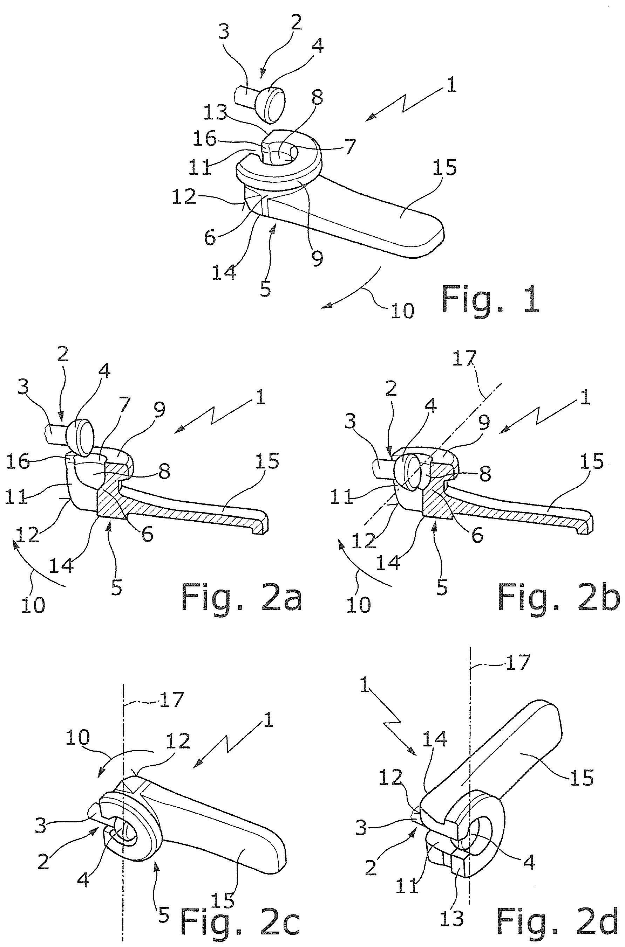

Der in **Fign. 1 und 2** gezeigte Spannverbinder **1** zum Verbinden zweier Bauteile umfasst einen Bolzen **2** mit einem Bolzenschaft **3** und einem Bolzenkopf **4** sowie einen Exzenterhebel **5,** der einen Lagertopf 6 mit einer Topföffnung **7** und einem als Schwenklager ausgebildeten, viertel- bis halbkugelförmigen Topfinnenraum **8** aufweist. Der Bolzenkopf 4 ist auf seiner dem Bolzenschaft 3 zugewandten Bolzenseite halbkugelförmig ausgebildet. Vorzugsweise ist der Bolzen 2 ein Drehteil aus Stahl und der Exzenterhebel 5 ein einstückiges Kunststoff- oder Zinkdruckgussteil. Statt teilkugelförmig können der Bolzenkopf 4 und der Topfinnenraum 8 alternativ auch teilzylinderförmig ausgebildet sein.

Die Topföffnung 7 kann optional von einem Kragen 9 umgeben sein, der radial nach außen über die Topfwandung vorsteht. Der Lagertopf 6 weist einen sich von der Topföffnung 7 entgegen der Spannrichtung **10** des Exzenterhebels 5 erstreckenden Schlitz **11** und zu beiden Seiten des Schlitzes 11 eine bezüglich der Schwenkachse 8 exzentrische Außenkontur **12** auf. Der Kragen 9 ist als Ringsegment ausgebildet, dessen zwei Stirnseiten zu beiden Seiten des Schlitzes 11 gemeinsam eine ebene Anlagefläche **13** definieren. Der Abstand der Außenkontur 12 zum Topfinnenraum 8 nimmt in Spannrichtung 10 ausgehend von der ebenen Anlagefläche 13 bis zum ebenen Topfboden **14** hin kontinuierlich zu, wobei die exzentrische Außenkontur 12 über eine Kante in den Topfboden 14 übergeht. Der flache Hebelarm **15** des Exzenterhebels 5 greift auf der dem Schlitz 11 gegenüberliegenden Seite des Lagertopfs 6 am Topfboden 14 an und verläuft etwa parallel zum Kragen 9. Der Schlitz 11 hat nahe der Topföffnung 7, insbesondere auf Höhe des Kragens 9, eine elastisch aufweitbare Engstelle **16,** deren Schlitzbreite geringfügig kleiner als der Durchmesser des Bolzenschafts 3 ist.

Bei der Montage des Spannverbinders 1 wird der Exzenterhebel 5 mit seiner Topföffnung 7 in Richtung rechtwinklig zur Bolzenachse auf den Bolzenkopf 4 aufgesteckt und gleichzeitig der Bolzenschaft 3 in den Schlitz 11 eingeführt (Fig. 2a). Dabei wird die Engstelle 16 auf den Durchmesser des Bolzenschafts 3 elastisch aufgeweitet, bis sie hinter dem vorbeigeschobenen Bolzenschaft 3 verrastet, wodurch der Bolzen 2 und der Exzenterhebel 5 unverlierbar aneinander gehalten sind (Fig. 2b). Im Falle eines nicht erfindungsgemäßen Exzenterhebels 5 aus Zinkdruckgussteil sind zu beiden Seiten des Schlitzes 11 Nietstege (nicht gezeigt) vorgesehen, die, nachdem der Bolzenschaft 4 in den Schlitz 11 eingelegt worden ist, umgebogen bzw. vernietet werden, um den Bolzen 2 Exzenterhebel 5 zu sichern.

Mit seinem halbkugelförmigen Topfinnenraum 8 ist der Exzenterhebel 5 auf dem halbkugelförmigen Bolzenkopf 4 um eine Schwenkachse **17,** welche durch den vom Bolzenschaft 3 durchgriffenen Schlitz 11 definiert ist, um 90° schwenkbar zwischen einer Ausgangsstellung (Fig. 2c) und einer Spannstellung (Fig. 2d) gelagert. In der Ausgangsstellung ist der Hebelarm 15 parallel zum Bolzen 2 ausgerichtet und liegt mit seiner Engstelle 16 am Bolzenschaft 3 an. In der Spannstellung ist der Hebelarm 15 rechtwinklig zum Bolzen 2 ausgerichtet.

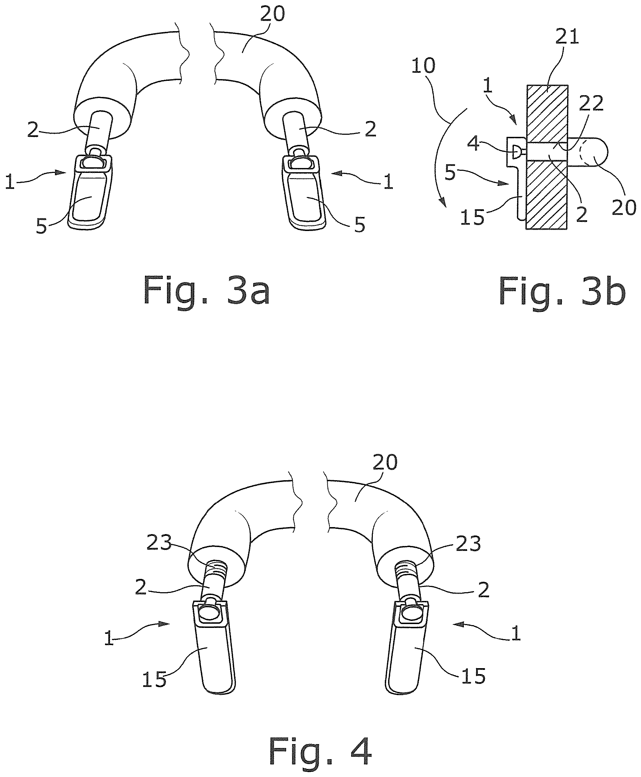

In den **Fign. 3a, 3b** wird ein Griff **20** aus Kunststoff an einer Möbelwand **21** mithilfe von zwei Spannverbindern 1 befestigt, deren Bolzen 2 als Einlegeteile im Griff 20 verankert sind. Die Bolzen 2 werden jeweils durch eine Bohrung **22** der Möbelwand 21 hindurchgesteckt, bis ihre Bolzenköpfe 4 an der Rückseite der Möbelwand 21 aus der Bohrung 22 vorstehen. Dann werden die Exzenterhebel 5 wie oben beschrieben auf die Bolzenköpfe 4 aufgesteckt und verrastet. Aus dieser Ausgangsstellung werden die Exzenterhebel 5 jeweils um 90° in Spannrichtung 10 geschwenkt, bis in der Spannstellung der Griff 20 durch die an der Rückseite der Möbelwand 21 abrollenden exzentrischen Außenkonturen 12 der Exzenterhebel 5 an der Möbelwand 21 festgespannt ist. In der Spannstellung liegt jeder Exzenterhebel 5 mit seinem ebenen Topfboden 14 an der Rückseite der Möbelwand 21 an, wobei die zwischen der exzentrischen Außenkontur 12 und dem Topfboden 14 vorhandene Kante den Exzenterhebel 5 in der Spannstellung sichert. Alternativ oder zusätzlich kann eine Selbstsicherung des Exzenterhebels 5 auch durch ein Überspannen kurz vor der Spannstellung erfolgen. In der Spannstellung verläuft der Hebelarm 15 parallelbeabstandet zur Möbelwand 21, so dass zur Demontage des Griffs 20 der Exzenterhebel 5 manuell leicht zurück in die Ausgangsstellung geschwenkt werden kann.

Vom Griff der Fig. 3 unterscheidet sich der in **Fig. 4** gezeigte Griff 20 lediglich dadurch, dass hier die beiden Bolzen 2 jeweils über ein Gewinde 23 in den Griff 20 eingeschraubt sind.

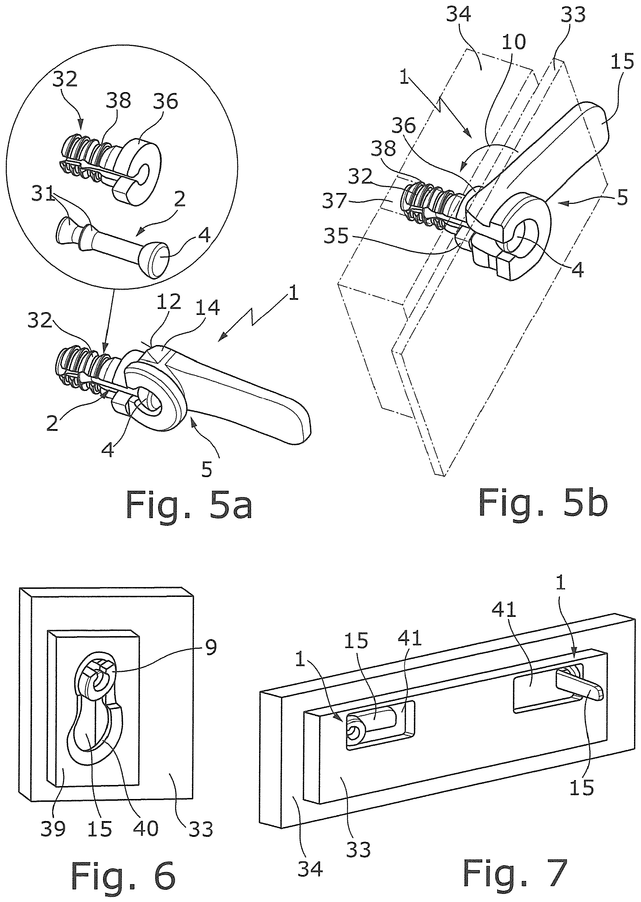

In den **Fign. 5a, 5b** ist der Bolzen 2 des Spannverbinders 1 als Spreizbolzen mit zwei Spreizkonen **31** ausgebildet, auf den eine längsgeschlitzte Spreizmuffe **32** aus Kunststoff aufgeclipst ist. Alternativ kann der Spreizbolzen 2 auch ein von Kunststoff umspritztes Einlegeteil sein. Um zwei aneinander anliegende Bauteile (z.B. Möbelplatten) **33, 34** miteinander zu binden, wird als erster Montageschritt die Spreizmuffe 32 auf dem Bolzen 2 aufgeclipst, und dann wird dieser Spreizbolzen an dem einen zu befestigenden, ersten Bauteil 33 vormontiert, indem der Bolzenkopf 4 durch eine Bohrung **35** des ersten Bauteils 33 hindurchgesteckt und anschließend der Exzenterhebel 5 wie oben beschrieben auf den Bolzenkopf 4 aufgesteckt und verrastet wird. Der Spannverbinder 1, der gegen Herausfallen aus der Bohrung 35 einerseits durch den Randkragen **36** der Spreizmuffe 32 und andererseits durch den Exzenterhebel 5 gesichert ist, ist nun am ersten Bauteil 33 vormontiert. Der Endkunde kann das erste Bauteil 33 nehmen und dieses mit der Spreizmuffe 32 des vormontierten Spannverbinders 1 in die Bohrung **37** des anderen, zweiten Bauteils 34 einstecken, bis die beiden Bauteile 33, 34 aneinander anliegen und der Randkragen 36 der Spreizmuffe 32 in der gestuften Bohrung 37 des zweiten Bauteils 34 aufgenommen ist. Abschließend wird der Exzenterhebel 5 in Spannrichtung 10 um 90° umgelegt. Dabei bewirkt die am ersten Bauteil 33 abrollende exzentrische Außenkontur 12 einerseits, dass der Spreizbolzen 2 aus der vom zweiten Bauteil 34 ortsfest gehaltenen Spreizmuffe 32 etwas herausgezogen und durch die Spreizkonen 31 die Spreizmuffe 32 nach außen aufgespreizt wird, und andererseits, dass die beiden Bauteile 33, 34 aufeinander zu gezogen und dadurch aneinander festgeklemmt werden. Zusätzlich weist die Spreizmuffe 32 mehrere Umfangsrippen **38** auf, die sich beim Aufspreizen der Spreizmuffe 32 in die Bohrungswandung des zweiten Bauteils 34 eingraben und so die Spreizmuffe 32 fest in der Bohrung 37 verankern. In der Spannstellung liegt der Exzenterhebel 5 mit seinem ebenen Topfboden 14 und mit seinem Hebelarm 15 am ersten Bauteil 33 an, wobei die zwischen der exzentrischen Außenkontur 12 und dem Topfboden 14 vorhandene Kante den Exzenterhebel 5 in der Spannstellung sichert. Zusätzlich kann eine Selbstsicherung des Exzenterhebels 5 durch ein Überspannen kurz vor der Spannstellung erfolgen. Durch den am ersten Bauteil 33 vormontierten Spannverbinder 1 bekommt der Endkunde keine einzelnen Befestigungselemente, und die Montageschritte erschließen sich dem Endkunden einfach, intuitiv und schnell. Natürlich stehen prinzipiell auch andere Montagereihenfolgen zur Verfügung.

In **Fig. 6** ist ein weiteres Bauteil **39** mit einem sich nach oben verjüngenden Schlüsselloch **40** an dem Spannverbinder 1, nämlich am Lagertopf 6 zwischen dem radial nach außen vorstehenden Kragen 9 und dem ersten Bauteil 33, eingehängt. Der Durchmesser der unteren Schlüssellochhälfte ist größer als der Au-βendurchmesser des Kragens 9, und der Durchmesser der oberen Schlüssellochhälfte entspricht dem Außendurchmesser des Lagertopfs 6.

In **Fig. 7** ist das erste Bauteil 33 am zweiten Bauteil 34 mithilfe zweier Spannverbinder 1 befestigt, deren Hebelarme 15 in der Spannstellung jeweils am Boden einer rechteckigen Aussparung **41** des ersten Bauteils 33 anliegen. Die Tiefe der Aussparungen 41 entspricht mindestens der Höhe der Spannverbinder 1, die somit vollständig in der Aussparung 41 versenkt sind.

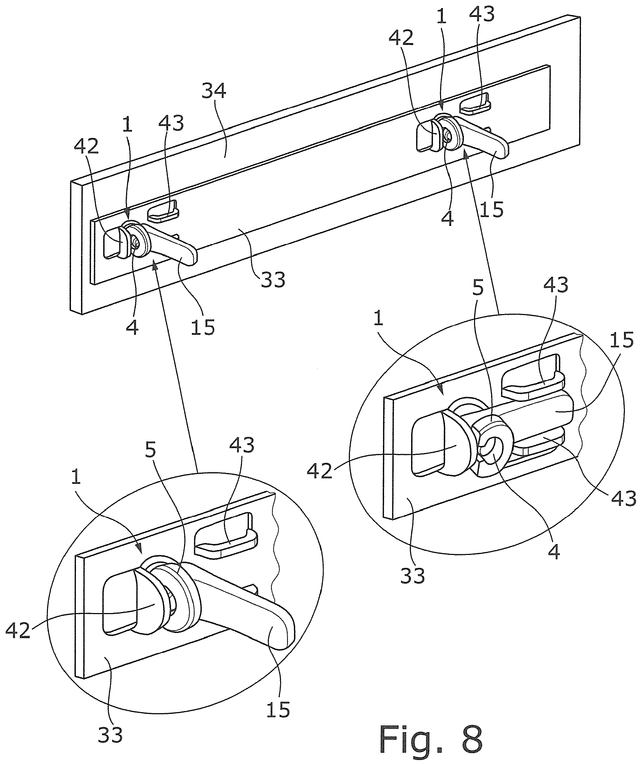

In **Fig. 8** ist das erste Bauteil 33 ein Blechteil mit zwei nicht gezeigten Öffnungen, durch die hindurch die Bolzenköpfe 4 zweier im zweiten Bauteil 34 verankerter Spannbolzen 2 vorstehen. An jede der Öffnungen schließt sich links eine vertikale Lasche **42** und rechts zwei übereinander angeordnete horizontale Laschen **43** an, die jeweils aus dem Blechteil nach vorne umgebogen sind. Der Exzenterhebel 5 des in Fig. 8 linken Spannverbinders 1 ist in seiner Ausgangsstellung und der Exzenterhebel 5 des rechten Spannverbinders 1 in seiner Spannstellung gezeigt, in der der Hebelarm 15 am ersten Bauteil 33 parallel anliegt. In dieser Spannstellung ist der Exzenterhebel 5 dadurch gesichert, dass einerseits seine Anlagefläche 13 an der vertikalen Lasche 42 flächig anliegt und andererseits der Hebelarm 15 zwischen den horizontalen Laschen 43 aufgenommen und verrastet ist.

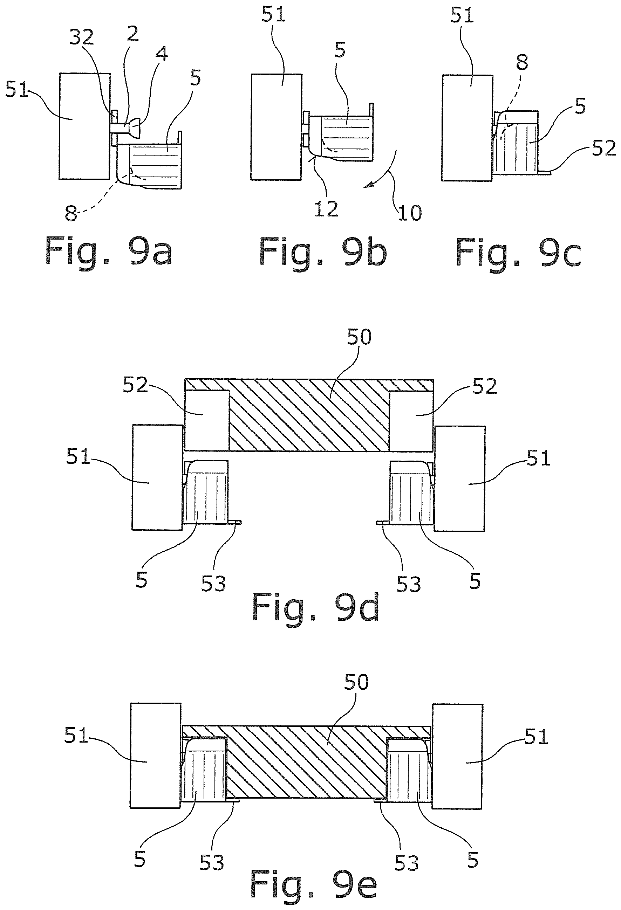

In den **Fign. 9a-9e** sind die Montageschritte zum Befestigen eines Tablars **50** zwischen zwei Seitenwänden **51** mittels zweier Spannverbinder 1 gezeigt. Zuerst wird der Spannbolzen 2, z.B. mittels der Spreizmuffe 32, in der Seitenwand 51 verankert (Fig. 9a) und anschließend der Exzenterhebel 5 von unten wie oben beschrieben auf den Bolzenkopf 4 aufgesteckt und verrastet (Fig. 9b). Aus dieser horizontalen Ausgangsstellung wird der Exzenterhebel 5 um 90° in Spannrichtung 10 heruntergeschwenkt, bis in der vertikalen Spannstellung der Exzenterhebel 5 durch seine an der Seitenwand 51 abrollende exzentrische Außenkontur 12 an der Seitenwand 51 festgespannt ist und daran anliegt (Fig. 9c). Das Tablar 50 wird jeweils mit einer seitlich offenen, bodenseitigen Sackbohrung **52** von oben auf die beiden als zylindrische Trägerteile ausgebildeten Exzenterhebel 5 aufgesteckt (Fig. 9d), bis es auf einem Bodenvorsprung **53** des Exzenterhebels 5 aufliegt (Fig. 9e). Die beiden Exzenterhebel 5 sind in ihrer Spannstellung durch das aufliegende Tablar 50 gesichert.

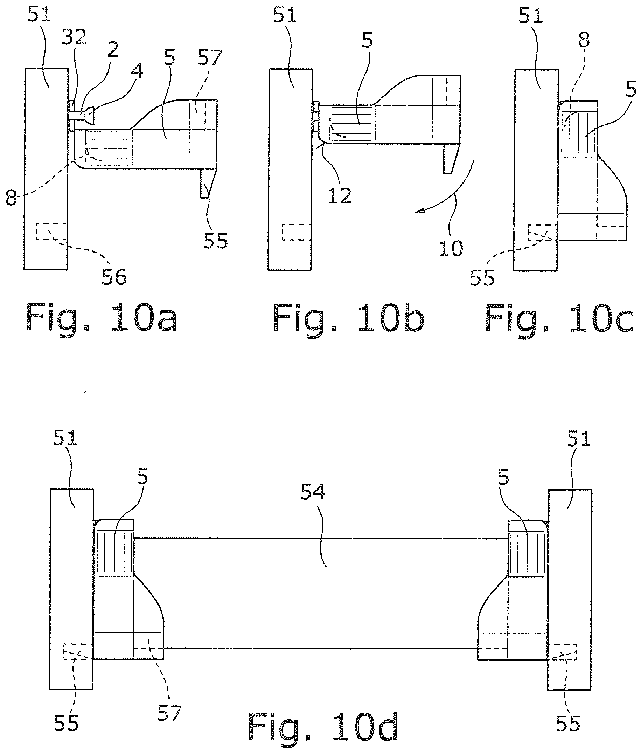

In den **Fign. 10a-10d** sind die einzelnen Montageschritte zum Befestigen einer Kleiderstange **54** zwischen zwei Seitenwänden 51 mittels zweier Spannverbinder 1 gezeigt. Zuerst wird der Spannbolzen 2, z.B. mittels der Spreizmuffe 32, in der Seitenwand 51 verankert (Fig. 10a) und anschließend der Exzenterhebel 5 von unten wie oben beschrieben auf den Bolzenkopf 4 aufgesteckt und verrastet (Fig. 10b). Aus dieser horizontalen Ausgangsstellung wird der Exzenterhebel 5 um 90° in Spannrichtung 10 heruntergeschwenkt, bis in der vertikalen Spannstellung der Exzenterhebel 5 durch seine an der Seitenwand 51 abrollende exzentrische Au-ßenkontur 12 an der Seitenwand 51 festgespannt ist und daran anliegt (Fig. 10c). Außerdem weist der Exzenterhebel 5 an der Anlageseite einen Zapfen **55** auf, der in der vertikalen Spannstellung passgenau in ein Loch **56** der Seitenwand 51 eingreift. Die Kleiderstange 54 wird von oben in eine nach oben offene Aufnahme **57** des Exzenterhebels 5 eingehängt (Fig. 10d), die in der Spannstellung des Spannverbinders 1 in Richtung quer zur Bolzenachse des Bolzens 2 offen ist. Die beiden Exzenterhebel 5 sind in ihrer Spannstellung durch die eingehängte Kleiderstange 54 gesichert. Zur Befestigung anderer Komponenten muss die zum Einstecken oder Einhängen der Komponente am Exzenterhebel 5 vorhandene Aufnahme 57 je nach Komponente anders gestaltet sein.

Für die oben beschriebene einfache, intuitive und schnelle Montage sind anders als bei der in Fign. 9 und 10 gezeigten Montage, bei der Bolzen 2 und Exzenterhebel 5 erst vor Ort vom Endkunden zum Spannverbinder 1 zusammengesetzt werden, der Spreizbolzen, also Bolzen 2 und Spreizmuffe 32, und der Exzenterhebel 5 bereits durch Verrasten oder Vernieten vormontiert, d.h., der Endkunde braucht die Spreizmuffen 32 der vormontierten Spannverbinder 1 nur in die Bohrungen der Seitenwand 51 einzuführen und die Exzenterhebel 5 umzulegen.

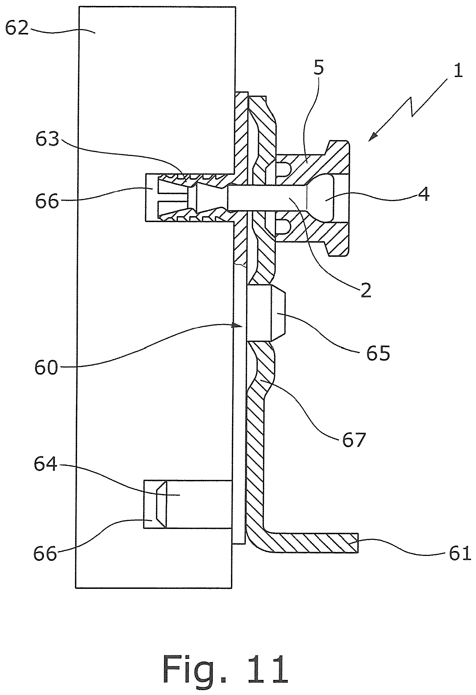

In **Fig. 11** ist eine Kunststoff-Adapterplatte **60** zur Befestigung einer hier nur teilweise dargestellten Schubladenführung **61** an der Seitenwand 62 eines Möbelkorpus mittels eines Spannverbinders 1 gezeigt. An der einen Plattenseite der Adapterplatte 60 sind eine Spreizmuffe **63** mit eingespritztem Spreizbolzen 2 und ein Steckzapfen **64** und auf der anderen Plattenseite ein Rastzapfen **65** angeformt. Der Abstand zwischen Spreizmuffe 63 und Steckzapfen 64 entspricht dem Lochabstand einer Seitenwand-Lochreihe, also vorliegend dem Abstand der beiden Bohrungen **66** der Seitenwand 62. Der Rastzapfen 65 befindet sich in der Mitte zwischen Spreizmuffe 63 und Steckzapfen 64. Die Adapterplatte 60 ist mit ihrem Bolzenkopf 4 durch ein Loch einer Befestigungsplatte **67** der Schubladenführung hindurchgesteckt und mittels Rastzapfens 65 an der Befestigungsplatte 67 verrastet. Anschließend ist der Exzenterhebel 5 auf den Bolzenkoppf 4 aufgesteckt und verrastet. Die so vormontierte Befestigungsplatte 67 wird mit der Spreizmuffe 63 und dem Steckzapfen 64 in die beiden Bohrungen 66 der Seitenwand 62 eingeführt; abschießend wird der Exzenterhebel 5 umgelegt, wodurch die Adapterplatte 60 und damit auch die Befestigungsplatte 67 an der Seitenwand 62 befestigt sind. Die Adapterplatte 60 übernimmt somit die Funktion der Spreizmuffe, definiert zudem das korrekte Abstandsmaß (Spannmaß) und verbessert die Kraftübertragung zur Schubladenführung 61 durch die beidseitig angebrachten Steck- bzw. Rastzapfen 64, 65, wodurch Quer und Scherkräfte wesentlich besser angefangen werden können als über einen Spreizverbinder allein.

## Patentansprüche

1. Spannverbinder (1) zum Verbinden zweier Bauteile, mit einem Bolzen (2), der einen Bolzenschaft (3) und einen Bolzenkopf (4) aufweist, welcher auf seiner dem Bolzenschaft (3) zugewandten Bolzenseite teilkugel- oder teilzylinderförmig, insbesondere halbkugelförmig bzw. halbzylinderförmig, ausgebildet ist, und mit einem Exzenterhebel (5) aus Kunststoff, der einen Lagertopf (6) mit einer Topföffnung (7) und einem als Schwenklager ausgebildeten, teilkugel- oder teilzylinderförmig ausgebildeten Topfinnenraum (8) aufweist, mit welchem der Exzenterhebel (5) auf dem Bolzenkopf (4) um eine Schwenkachse (17) schwenkbar zwischen einer Ausgangsstellung und einer Spannstellung lagerbar bzw. gelagert ist, wobei der Lagertopf (6) einen sich von der Topföffnung (7) entgegen der Spannrichtung (10) erstreckenden Schlitz (11) für den Bolzenschaft (3) und entlang des Schlitzes (11) zu beiden Seiten des Schlitzes (11) eine bezüglich der Schwenkachse (17) exzentrische Außenkontur (12) aufweist,
wobei die Topföffnung (7) von einem Kragen (9) umgeben ist, der radial nach außen über die Topfwandung vorsteht und als Ringsegment ausgebildet ist, dessen zwei Stirnseiten zu beiden Seiten des Schlitzes (11) gemeinsam eine ebene Anlagefläche (13) definieren,
wobei der Exzenterhebel (5) mit seinem Topfinnenraum (8) auf dem Bolzenkopf (4) um eine Schwenkachse (17), welche durch den vom Bolzenschaft (3) durchgriffenen Schlitz (11) definiert ist, um 90° schwenkbar zwischen einer Ausgangsstellung und einer Spannstellung gelagert ist, wobei ein flacher Hebelarm (15) des Exzenterhebels (5), welcher auf der dem Schlitz (11) gegenüberliegenden Seite des Lagertopfs (6) am Topfboden (14) angreift und etwa parallel zum Kragen (9) verläuft, in der Ausgangsstellung parallel zum Bolzen (2) ausgerichtet ist und in der Spannstellung rechtwinklig zum Bolzen (2) ausgerichtet ist,
wobei das dem Bolzenkopf (4) abgewandte Ende des Bolzens (2) mindestens einen Spreizkonus (31) aufweist, auf dem eine Spreizmuffe (32) befestigt, insbesondere aufgeclipst ist,
wobei der Abstand der exzentrischen Außenkontur (12) zum Topfinnenraum (8) in Spannrichtung (10) ausgehend von der ebenen Anlagefläche (13) bis zum ebenen Topfboden (14) hin kontinuierlich zunimmt, wobei die exzentrische Außenkontur (12) über eine Kante in den Topfboden (14) übergeht, und
wobei der Schlitz (11) nahe der Topföffnung (7) eine in der Ausgangsstellung am Bolzenschaft (3) anliegende, elastisch aufweitbare Engstelle (16) aufweist, deren Schlitzbreite geringfügig kleiner als der Durchmesser des Bolzenschafts (3) ist, wodurch der Exzenterhebel (5) mit seiner Topföffnung (7) in Richtung rechtwinklig zur Bolzenachse auf den Bolzenkopf (4) aufsteckbar und gleichzeitig der Bolzenschaft (3) in den Schlitz (11) einführbar ist und die Engstelle (16) auf den Durchmesser des Bolzenschafts (3) elastisch aufweitbar ist, bis sie hinter dem vorbeigeschobenen Bolzenschaft 3 verrastet, um den Bolzen (2) und den Exzenterhebel (5) unverlierbar aneinander zu halten.

2. Spannverbinder nach Anspruch 1, **dadurch gekennzeichnet, dass** der Exzenterhebel (5) als ein Trägerteil, insbesondere zum Aufstecken eines weiteren Bauteils (50), ausgebildet ist oder eine Aufnahme aufweist, die in der Spannstellung des Spannverbinders (1) in Richtung quer zur Bolzenachse des Bolzens (2) offen ist.

3. Spannverbinder nach einem der vorhergehenden Ansprüche, **dadurch gekennzeichnet, dass** der Exzenterhebel (5) an seiner in Spannrichtung (10) weisenden Rückseite einen vorstehenden Zapfen (55) aufweist.

4. Befestigungsanordnung zum Befestigen von Bauteilen mit mindestens einem Spannverbinder (1) nach einem der vorhergehenden Ansprüche.

5. Befestigungsanordnung nach Anspruch 4 mit zwei aneinander anliegenden Bauteilen (20, 21; 33, 34), **dadurch gekennzeichnet, dass** der Bolzen (2) des Spannverbinders (1) an dem einen Bauteil (20; 34) befestigt ist und mit seinem Bolzenkopf (4) aus dem anderen Bauteil (21; 33) vorsteht und wobei der in Spannstellung befindliche Exzenterhebel (5) des Spannverbinders (1) die beiden Bauteile (20, 21; 33, 34) aneinander festklemmt.

6. Befestigungsanordnung nach Anspruch 5, **dadurch gekennzeichnet, dass** in der Spannstellung der Exzenterhebel (5) mit seinem Hebelarm (15) an dem einen Bauteil (21, 33) anliegt.

7. Befestigungsanordnung nach Anspruch 5 oder 6, **dadurch gekennzeichnet, dass** in der Spannstellung der Exzenterhebel (5) mit seinem Hebelarm (15) an dem einen Bauteil (33) verrastet ist.

8. Befestigungsanordnung nach einem der Ansprüche 5 bis 7, **dadurch gekennzeichnet, dass** ein weiteres Bauteile (39), insbesondere mittels eines Schlüssellochs (40), an dem Exzenterhebel (5) befestigt ist.

9. Befestigungsanordnung nach Anspruch 4 mit zwei Seitenwänden (51), zwischen denen ein weiteres Bauteil (50; 54) mittels Spannverbindern (1) befestigt ist, **dadurch gekennzeichnet, dass** die Spannbolzen (2) in den beiden Seitenwänden (51) verankert und die auf den Bolzenköpfen (4) montierten Exzenterhebel (5) an der Seitenwand (51) festgespannt sind und dass das weitere Bauteil (50; 54) an den Exzenterhebeln (5) hängend gehalten ist.

## Claims

1. A tension connector (1) for connecting two components, comprising a bolt (2) which has a bolt shaft (3) and a bolt head (4) formed as a partial sphere or partial cylinder, in particular a hemisphere or a semi-circle, on its bolt side facing the bolt shaft (3), and comprising an eccentric lever (5) of plastic material, which has a bearing pot (6) with a pot opening (7) and with a pot interior (8) which is formed as a partial sphere or partial cylinder and is formed as a pivoting bearing and by means of which the eccentric lever (5) can be or is mounted on the bolt head (4) so as to be pivotable about a pivot axis (17) between a starting position and a tensioned position, wherein the bearing pot (6) has a slot (11) for the bolt shaft (3) extending from the pot opening (7) against the tensioning direction (10) and has an outer contour (12) along the slot (11) on both sides of the slot (11) which is eccentric relative to the pivot axis (17),
wherein the pot opening (7) is surrounded by a collar (9) that radially projects to the outside past the pot wall and is formed as ring segment, the two end faces of which together define a flat contact surface on both sides of the slot (11),
wherein the eccentric lever (5) with its pot interior (8) is mounted on the bolt head (4) so as to be pivotable by 90° about a pivot axis (17) between a starting position and a tensioned position, the pivot axis being defined by the slot (11) through which the bolt shaft (3) engages, wherein a flat lever arm (15) of the eccentric lever (5), which engages the pot bottom (14) on the side of the bearing pot (6) opposite the slot (11) and extends approximately parallel to the collar (9) is oriented parallel to the bolt (2) in the starting position and is oriented at right angles to the bolt (2) in the tensioned position,
wherein the end of the bolt (2) remote from the bolt head (4) has at least one spreading cone (31), onto which a spreading sleeve (32) is attached, in particular clipped on,
wherein the distance of the eccentric outer contour (12) from the pot interior (8) in the tensioning direction (10) increases continuously starting from the flat contact surface (13) to the flat pot bottom (14), wherein the eccentric outer contour merges into the pot bottom (14) via an edge, and wherein close to the pot opening (7) the slot (11) has an elastically widenable constriction (16) that abuts the bolt shaft (3) in the starting position, the slot width of which constriction is slightly smaller than the diameter of the bolt shaft (3), whereby the eccentric lever (5) can be pushfitted with its pot opening (7) onto the bolt head (4) in a direction perpendicular to the bolt axis and at the same time the bolt shaft (3) can be inserted into the slot (11) and the constriction (16) can be elastically widened to the diameter of the bolt shaft (3) until it locks behind the pushed-past bolt shaft (3) in order to hold the bolt (2) and the eccentric lever (5) together in an undetachable manner.

2. The tension connector as claimed in claim 1, **characterized in that** the eccentric lever (5) is configured as a carrier part, in particular for push-fit connection of a further component (50), or has a receptacle which, in the tensioned position of the tension connector (1), is open in the direction transversely to the bolt axis of the bolt (2).

3. The tension connector as claimed in any of the preceding claims, **characterized in that** the eccentric lever (5) has a pin (55) protruding on its back side pointing in the tensioning direction (10).

4. A fixing arrangement for fixing components with at least one tension connector (1) as claimed in any of the preceding claims.

5. The fixing arrangement as claimed in claim 4, with two components (20, 21; 33, 34) lying against each other, **characterized in that** the bolt (2) of the tension connector (1) is attached to the one component (20; 34), and with its bolt head (4) protrudes from the other component (21; 33), and wherein in the tensioned position, the eccentric lever (5) of the tension connector (1) fixedly clamps the two components (20, 21; 33, 34) together.

6. The fixing arrangement as claimed in claim 5, **characterized in that** in the tensioned position, the eccentric lever (5) bears with its lever arm (15) on the one component (21, 33).

7. The fixing arrangement as claimed in claim 5 or 6, **characterized in that** in the tensioned position, the eccentric lever (5) is latched with its lever arm (15) on the one component (33).

8. The fixing arrangement as claimed in any of claims 5 to 7, **characterized in that** a further component (39) is attached to the eccentric lever (5), in particular by means of a keyhole (40).

9. The fixing arrangement as claimed in claim 4, with two side walls (51), between which a further component (50; 54) is attached by means of tension connectors (1), **characterized in that** the tension bolts (2) are anchored in the two side walls (51), and the eccentric levers (5) mounted on the bolt heads (4) are fixedly clamped to the side wall (51), and that the further component (50; 54) is held suspended from the eccentric levers (5).

## Revendications

1. Elément (1) d'assemblage par serrage conçu pour relier deux parties structurelles, comprenant un boulon (2) muni d'une tige (3) et d'une tête (4) présentant, sur son côté tourné vers ladite tige (3) du boulon, une configuration partiellement sphérique ou partiellement cylindrique, notamment hémisphérique ou semi-cylindrique ; et un levier à excentrique (5) en matière plastique, pourvu d'une cuvette de palier (6) présentant un orifice (7) et un espace intérieur (8) de configuration partiellement sphérique ou partiellement cylindrique, qui est réalisé sous la forme d'un palier de pivotement et par lequel ledit levier à excentrique (5) peut être, ou est respectivement monté sur la tête (4) du boulon avec aptitude pivotante, autour d'un axe de pivotement (17), entre une position initiale et une position de serrage, la cuvette de palier (6) comportant une fente (11) dédiée à la tige (3) du boulon et s'étendant en sens inverse de la direction de serrage (10) à partir de l'orifice (7) de ladite cuvette et, le long de la fente (11), de part et d'autre de ladite fente (11), un profil extérieur (12) excentré par rapport audit axe de pivotement (17),
sachant que
l'orifice (7) de la cuvette est entouré d'une collerette (9) qui fait saillie vers l'extérieur dans le sens radial, au-delà de la paroi de ladite cuvette, et est réalisée sous la forme d'un segment annulaire dont les deux faces extrêmes définissent conjointement une surface plane de contact (13), des deux côtés de ladite fente (11),
sachant que
le levier à excentrique (5) est monté sur la tête (4) du boulon par l'espace intérieur (8) de sa cuvette, avec aptitude pivotante de 90° entre une position initiale et une position de serrage, autour d'un axe de pivotement (17) défini par la fente (11) traversée par la tige (3) dudit boulon, sachant qu'un bras aplati (15) dudit levier à excentrique (5), qui se rattache au fond (14) de la cuvette du côté de ladite cuvette de palier (6) pointant à l'opposé de ladite fente (11), et qui s'étend à peu près parallèlement à la collerette (9), est orienté parallèlement au boulon (2) dans la position initiale et est orienté perpendiculairement audit boulon (2) dans la position de serrage,
sachant que
l'extrémité du boulon (2) tournée à l'opposé de la tête (4) dudit boulon est dotée d'au moins un cône d'expansion (31) sur lequel un manchon expansible (32) est fixé, notamment clipsé,
sachant que
la distance comprise entre le profil extérieur excentré (12) et l'espace intérieur (8) de la cuvette croît continûment, dans la direction de serrage (10), jusqu'au fond plan (14) de ladite cuvette à partir de la surface plane de contact (13), ledit profil extérieur excentré (12) fusionnant dans ledit fond (14) de la cuvette par l'intermédiaire d'une arête, et sachant que
la fente (11) comporte, à proximité de l'orifice (7) de la cuvette, une zone resserrée (16) déployable élastiquement, qui est en applique contre la tige (3) du boulon dans la position initiale, et dont la largeur de fente est légèrement plus petite que le diamètre de ladite tige (3) du boulon, d'où il résulte que le levier à excentrique (5) peut être emboîté sur la tête (4) du boulon par l'orifice (7) de sa cuvette, dans une direction perpendiculaire à l'axe dudit boulon, que ladite tige (3) du boulon peut être simultanément introduite dans ladite fente (11), et que ladite zone resserrée (16) peut être déployée élastiquement, pour prendre le diamètre de la tige (3) du boulon, jusqu'à ce qu'elle s'encliquette derrière ladite tige (3) du boulon poussée en avant, de telle sorte que ledit boulon (2) et ledit levier à excentrique (5) soient retenus l'un sur l'autre de manière imperdable.

2. Elément d'assemblage par serrage selon la revendication 1, **caractérisé par le fait que** le levier à excentrique (5) est réalisé sous la forme d'une pièce de support notamment dévolue à l'emboîtement d'une partie structurelle supplémentaire (50), ou bien comporte un logement ouvert, dans la position de serrage dudit élément (1) d'assemblage par serrage, dans une direction transversale par rapport à l'axe du boulon (2).

3. Elément d'assemblage par serrage selon l'une des revendications précédentes, **caractérisé par le fait que** le levier à excentrique (5) est muni d'un tenon saillant (55) sur sa face postérieure pointant dans la direction de serrage (10).

4. Ensemble de fixation dédié à la fixation de parties structurelles, muni d'au moins un élément (1) d'assemblage par serrage conforme à l'une des revendications précédentes.

5. Ensemble de fixation selon la revendication 4, comprenant deux parties structurelles (20, 21 ; 33, 34) placées en juxtaposition mutuelle, **caractérisé par le fait que** le boulon (2) de l'élément (1) d'assemblage par serrage est fixé à l'une (20 ; 34) des parties structurelles et fait saillie, par sa tête (4), au-delà de l'autre partie structurelle (21 ; 33), sachant que le levier à excentrique (5) dudit élément (1) d'assemblage par serrage coince fermement les deux parties structurelles (20, 21 ; 33, 34), l'une contre l'autre, lorsqu'il occupe la position de serrage.

6. Ensemble de fixation selon la revendication 5, **caractérisé par le fait que** le levier à excentrique (5) est en applique par son bras (15), dans la position de serrage, contre l'une (21 ; 33) des parties structurelles.

7. Ensemble de fixation selon la revendication 5 ou 6, **caractérisé par le fait que**, dans la position de serrage, le levier à excentrique (5) est encliqueté par son bras (15) sur l'une (33) des parties structurelles.

8. Ensemble de fixation selon l'une des revendications 5 à 7, **caractérisé par le fait qu'**une partie structurelle supplémentaire (39) est fixée au levier à excentrique (5), notamment au moyen d'un trou de serrure (40).

9. Ensemble de fixation selon la revendication 4, comprenant deux parois latérales (51) entre lesquelles une partie structurelle supplémentaire (50 ; 54) est fixée au moyen d'éléments (1) d'assemblage par serrage, **caractérisé par le fait que** les boulons de serrage (2) sont ancrés dans les deux parois latérales (51) et les leviers à excentriques (5), montés sur les têtes (4) desdits boulons, sont bloqués rigidement sur la paroi latérale (51) ; et **par le fait que** la partie structurelle supplémentaire (50 ; 54) est maintenue en suspension sur lesdits leviers à excentriques (5).
